# EUROPÄISCHE PATENTANMELDUNG

(11) **EP 1 441 147 A2**
(43) Veröffentlichungstag der Anmeldung: **28.07.2004**
(21) Anmeldenummer: 04000581.1
(22) Anmeldetag: 14.01.2004
(51) Int. Cl.: F16F 9/05, B29D 22/00

(54) **Vulkanisationsverfahren mit Balg für PKW-Luftfedern**

(30) Priorität: 25.01.2003 DE 10302883
(71) Anmelder: ContiTech Luftfedersysteme GmbH, 30165 Hannover (DE)
(72) Erfinder: Binder, Klaus, Dr., 31157 Sarstedt (DE); Hasselbring, Bernd, 29690 Lindwedel (DE); Jeischik, Joachim, 30974 Wennigsen (DE); Berger, Markus, 31319 Sehnde (DE); Oehl, Rainer, 30165 Hannover (DE); Kranz, Harald, 31008 Elze (DE); Wilmer, Roland, 30159 Hannover (DE); Schröder, Jörg, 31542 Bad Nenndorf (DE)

(57) **Zusammenfassung**

Die Erfindung betrifft ein Verfahren zum Herstellen bombierter, schlauchförmiger Erzeugnisse, insbesondere Luftfedern, aus einem Schlauchzuschnitt (10), der von innen mit einer Druckkraft beaufschlagt und gegen eine Vulkanisationsform (30) gedrückt wird. Ebenfalls betrifft die Erfindung eine Vorrichtung zum Durchführen des Verfahrens. Aufgabe der Erfindung ist es, ein wirtschaftliches und prozeßsicheres Verfahren und eine entsprechende Vorrichtung bereitzustellen. Erfindungsgemäß wird dies dadurch gelöst, dass in den Schlauchzuschnitt (10) ein Schlauchrollbalg (30) eingeführt wird und der Schlauchzuschnitt (10) gegen die Vulkanisationsform (30) gedrückt wird.

## Beschreibung

Die Erfindung betrifft ein Verfahren zum Herstellen bombierter, schlauchförmiger Erzeugnisse gemäß dem Oberbegriff des Anspruches 1 sowie eine Vorrichtung zur Durchführung des Verfahrens. Solche Verfahren dienen insbesondere zur Herstellung von Luftfedern im Kraftfahrzeugbereich.

Auf herkömmliche Art und Weise wurden bislang Schlauchzuschnitte von oben nach unten auf eine feste Innenform aufgezogen und mit einer Heizmanschette umgeben, bis die gewünschte Form dauerhaft erhalten wurde. Alternativ wurde ein Schlauchzuschnitt von innen nach außen über einen Heizschlauch gegen eine feste Form gedrückt, bis die gewünschte Form erzielt wurde. Diese Verfahren sind sehr aufwändig und benötigen einen großen apparativen Aufwand.

Aufgabe der vorliegenden Erfindung ist es, ein Verfahren und eine Vorrichtung bereitzustellen, mit denen prozesssicher Schlauchzuschnitte bombiert und vulkanisiert werden können.

Erfindungsgemäß wird diese Aufgabe durch ein Verfahren mit den Merkmalen des Anspruchs 1 sowie durch Vorrichtung mit den Merkmalen des Anspruches 5 gelöst. Vorteilhafte Ausgestaltungen und Weiterbildungen der Erfindung sind in den Unteransprüchen aufgeführt.

Erfindungsgemäß wird der Schlauchzuschnitt über einen Schlauchrollbalg gegen die Vulkanisationsform gedrückt, wodurch ein sicheres Bombieren des Schlauchzuschnittes möglich ist, ohne dass dabei Luft eingeschlossen wird, da diese durch das Abrollen des Schlauchrollbalges aus der Vulkanisationsform entfernt wird. Auf diese Art und Weise wird in einer hohen Prozesssicherheit ein Schlauchzuschnitt bombiert bzw. vulkanisiert. Dabei wird der Schlauchzuschnitt in die Vulkanisationsform eingelegt und durch Einschieben des Schlauchrollbalges entlang der Längserstreckung sowohl innerhalb der Vulkanisationsform festgelegt als auch gegen die Innenwandung der Vulkanisationsform gedrückt. Durch das in Längserstreckung des Schlauchzuschnittes fortschreitende Andrücken des Schlauchzuschnittes gegen die Vulkanisationsform wird ein gleichmäßiges Anliegen des Schlauchzuschnittes an der Vulkanisationsform gewährleistet.

In einer Weiterbildung ist vorgesehen, dass unter Beibehaltung des Druckes durch den Schlauchbalg der Schlauchzuschnitt vulkanisiert wird, indem die Vulkanisationsform zusammen mit dem Schlauchrollbalg und dem darin eingeklemmten Schlauchzuschnitt erwärmt wird.

Die Vulkanisation erfolgt dabei dergestalt, dass die Form durch einen Deckel und einen Stempel verschlossen wird, wobei der Schlauchrollbalg an dem dem Deckel zugewandten Ende des Stempels befestigt ist, also an dem oberen Ende des Stempels, der durch die Vulkanisationsform hindurch bewegt wird.

Die Vorrichtung zur Durchführung des Verfahrens mit dem Schlauchrollbalg sieht vor, dass an der Vulkanisationsform am unteren Ende ein erstes Ende des Schlauchrollbalges befestigt ist, wobei die Vulkanisationsform eine untere Öffnung aufweist, durch die der Stempel in die Vulkanisationsform einschiebbar ist. An dem oberen Ende des Stempels, der durch die Vulkanisationsform hindurch geschoben wird, ist das zweite Ende des Schlauchrollbalges befestigt, so dass einerseits der Schlauchrollbalg durch Einführen des Stempels in die Vulkanisationsform abgerollt wird und den Schlauchzuschnitt gegen die Innenwandung der Vulkanisationsform drückt, andererseits durch den Stempel selbst eine Stabilisierungswirkung für den Schlauchrollbalg bewirkt wird, so dass sowohl der Schlauchrollbalg als auch der Schlauchzuschnitt sicher und definiert innerhalb der Vulkanisationsform gehalten wird.

Eine Weiterbildung der Vorrichtung sieht vor, dass ein Deckel die Vulkanisationsform an einem oberen Ende verschließt, während der Stempel die untere Öffnung verschließt, wenn er vollständig in die Vulkanisationsform eingeschoben ist.

Zur Stabilisierung des Schlauchrollbalges bei dem Einführen des Stempels ist dem Stempel ein abnehmbarer Aufsatz zugeordnet, der im wesentlichen eine Verlängerung des Stempels darstellt, so dass sich der Schlauchrollbalg an diesen Aufsatz anschmiegt, wenn sich der Stempel nicht innerhalb der Vulkanisationsform befindet.

Anhand der nachfolgenden Figuren werden Ausführungsbeispiele der Erfindung näher beschrieben werden. Es zeigen:
- Figur 1 -: einen Einformungsvorgang eines Schlauchzuschnittes in eine Vulkanisationsform;
- Figur 2 -: einen Ausformvorgang eines vulkanisierten Schlauchzuschnittes aus einer Vulkanisationsform; sowie
- Figur 3 -: einen schematischen Prozesskreislauf einer Vulkanisation.

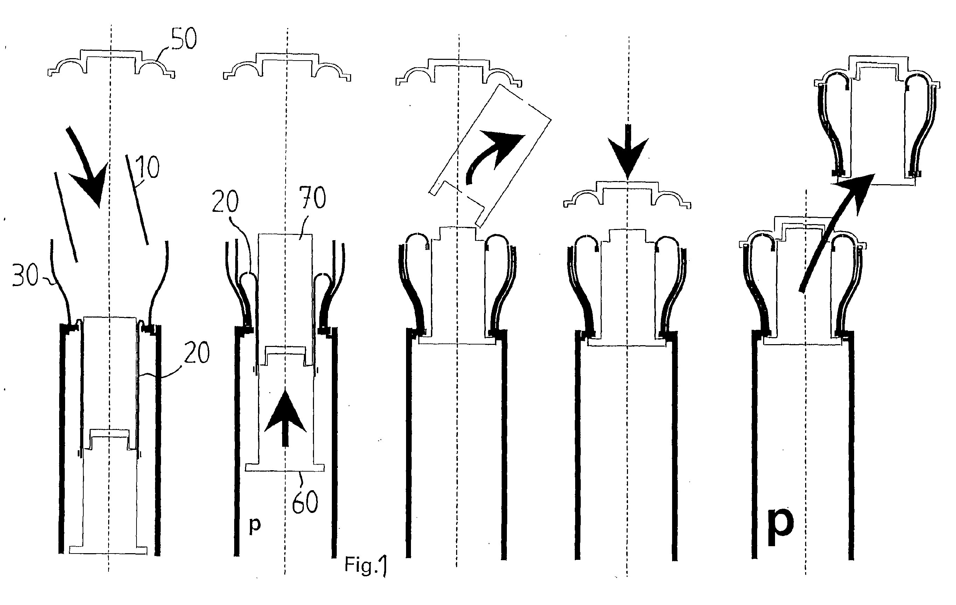

Figur 1 zeigt einen schematischen Ablauf eines Einformverfahrens eines Schlauchzuschnittes 10 in eine Vulkanisationsform 30. Dabei wird zunächst ein Schlauchzuschnitt 10 in die Vulkanisationsform 30 eingeführt, wobei am unteren Rand der Vulkanisationsform 30 ein Schlauchrollbalg 20 mit seinem oberen Ende befestigt ist. Bei dem Einlegen des Schlauchzuschnittes 10 in die Vulkanisationsform 30 befindet sich der Schlauchrollbalg 20 unterhalb der Vulkanisationsform 30 in einem gestreckten Zustand, der dadurch erreicht wird, dass ein Stempel 60 so weit nach unten verfahren wurde, bis sich der Schlauchrollbalg 20 in der gestreckten Position befindet. Sobald der Schlauchzuschnitt 10 in der Vulkanisationsform 30 eingelegt ist, wird der Stempel 60 in Richtung auf das obere Ende der Vulkanisationsform 30 bewegt, beispielsweise hydraulisch und/oder über pneumatisch oder über mechanische Aktuatoren. Dabei wird ein zur Stabilisierung vorgesehener Aufsatz 70 durch die Vulkanisationsform 30 und den Schlauchzuschnitt 10 hindurch geschoben und der Schlauchrollbalg 20 rollt von dem Aufsatz 70 ab und schmiegt sich von innen an den Schlauchzuschnitt 10 und presst diesen mit leichtem Druck p, vorzugsweise ein leichter Überdruck durch Druckluft, gegen die Innenwandung der Vulkanisationsform 30. Durch das voranschreitende Abrollen in Richtung des Vorschubes des Stempels 60 wird die zwischen dem Schlauchzuschnitt 10 und der Vulkanisationsform 30 befindliche Luft herausgedrückt, und ein vollständiges, einschlussfreies Anschmiegen und Anliegen des Schlauchzuschnittes 10 ist gewährleistet.

Nach Erreichen der Endposition des Stempels 60, in der der Stempel 60 die Vulkanisationsform 30 am unteren Ende verschließt, wird der Aufsatz 70 entfernt und das obere Ende der Vulkanisationsform 30 wird durch einen Deckel 50 verschlossen. Anschließend wird ein hoher Preßdruck P angelegt, die Vulkanisationsform 30 entnommen und dem weiteren Bearbeiten, nämlich dem Vulkanisieren, zugeführt.

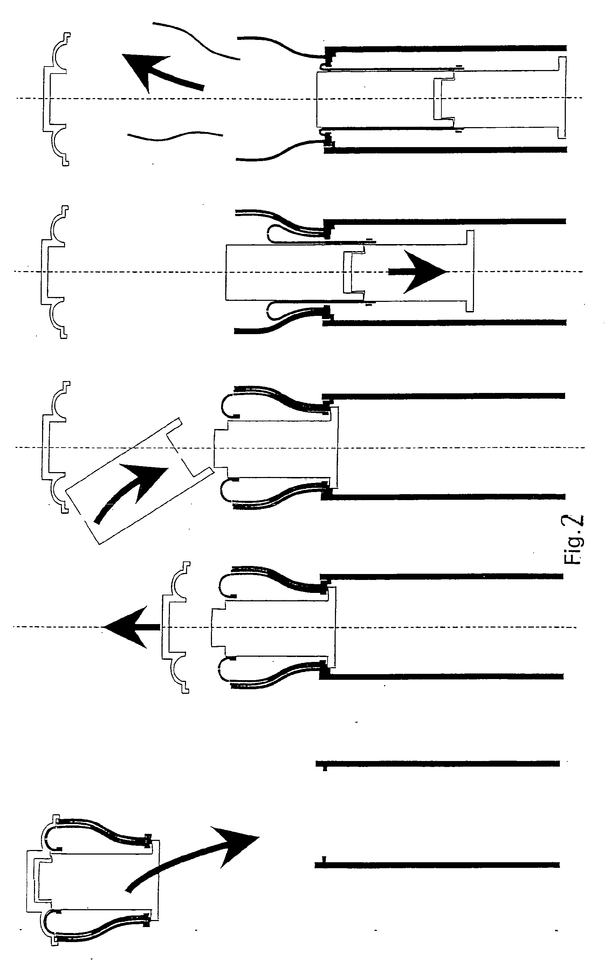

Das Entformen ist in der Figur 2 dargestellt und ist im Wesentlichen das umgekehrte Verfahren, das anhand der Figur 1 beschrieben wurde. Die Vulkanisationsform 30 mit dem fertig vulkanisierten Schlauchzuschnitt 10 wird auf eine Bearbeitungsstation aufgesetzt, der Deckel 50 wird geöffnet und der Aufsatz 70 wird auf den Stempel 60 als Verlängerung aufgesetzt. Anschließend wird der Stempel 60 mitsamt dem Aufsatz 70 nach unten verfahren und nimmt den Schlauchrollbalg 20 mit, indem er sich an den Aufsatz 70 anschmiegt. Nach dem vollständigen Verfahren des Stempels 60 nach unten gibt der Schlauchrollbalg 20 das untere Ende des vulkanisierten Schlauchzuschnittes 10 frei, der anschließend entnommen werden kann.

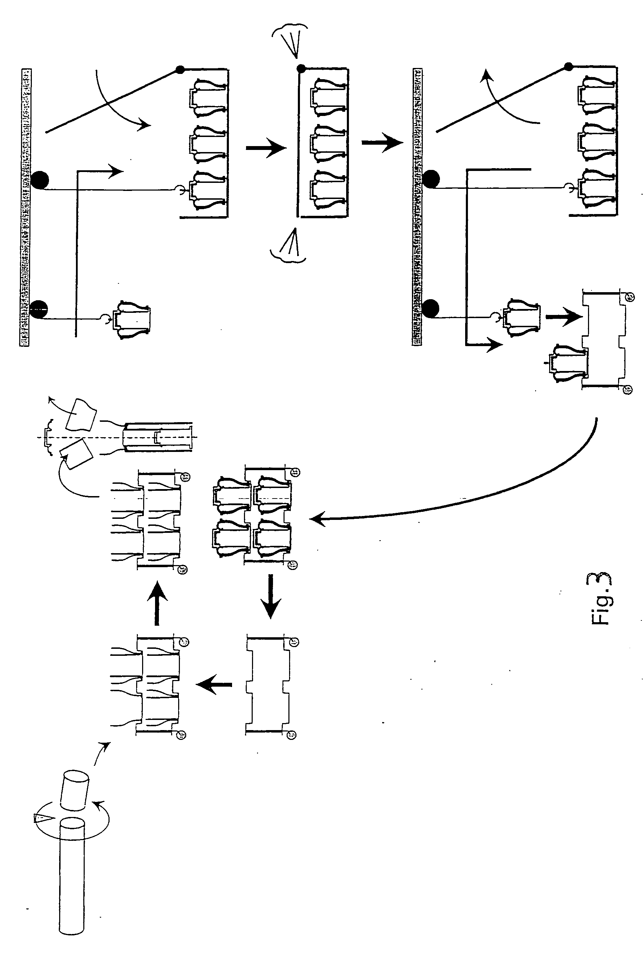

Zur besseren Übersicht ist in der Figur 3 der gesamte Prozesskreislauf der Vulkanisation eines Schlauchzuschnittes 10 mit dem anhand der Figuren 1 und 2 beschriebenen Verfahren dargestellt. Oben links beginnend im Uhrzeigersinn wird von einem entsprechenden Rohmaterial ein auf die passende Länge gekürzter Schlauchzuschnitt 10 hergestellt und in die Vulkanisationsform 30, wie anhand der Figur 1 beschrieben, eingeformt. Anschließend wird die Form 30 mitsamt Deckel 50 in eine Heizeinrichtung eingelegt und mit Hitze und Druck beaufschlagt, bis der Vulkanisationsvorgang beendet ist. Danach werden die Formen aus der Heizeinrichtung entnommen und zu einer Ausformstation gebracht, an der die Deckel 50 geöffnet und die fertig vulkanisierten Schlauchzuschnitte 10 entnommen werden.

## Patentansprüche

1. Verfahren zum Herstellen bombierter, schlauchförmiger Erzeugnisse, insbesondere Luftfedern, aus einem Schlauchzuschnitt (10), der von innen mit einer Druckkraft beaufschlagt und gegen eine Vulkanisationsform (30) gedrückt wird, **dadurch gekennzeichnet, dass** der Schlauchzuschnitt (10) über einen Schlauchrollbalg (20) gegen die Vulkanisationsform (30) gedrückt wird.

2. Verfahren nach Anspruch 1, **dadurch gekennzeichnet, dass** der Schlauchzuschnitt (10) in die Vulkanisationsform (30) eingelegt und durch Einschieben des Schlauchrollbalges (20) entlang der Längserstreckung des Schlauchzuschnittes (10) gegen die Vulkanisationsform (30) gedrückt wird.

3. Verfahren nach Anspruch 1 oder 2, **dadurch gekennzeichnet, dass** unter Beibehaltung des Druckes durch den Schlauchrollbalg (20) der Schlauchzuschnitt (10) vulkanisiert wird.

4. Verfahren nach einem der Ansprüche 1 bis 3, **dadurch gekennzeichnet, dass** die Vulkanisationsform (30) durch einen Deckel (50) und einen Stempel (60) verschlossen wird, wobei der Schlauchrollbalg (20) an dem dem Deckel (50) zugewandten Ende des Stempels (60) befestigt ist.

5. Vorrichtung zur Durchführung des Verfahrens nach einem der Ansprüche 1 bis 4 mit einer Vulkanisationsform (30), an deren unteren Ende ein erstes Ende eines Schlauchrollbalges (20) befestigt ist, wobei die Vulkanisationsform (30) eine untere Öffnung aufweist, durch die ein Stempel (60) in die Vulkanisationsform (30) einschiebbar ist, an dem ein zweites Ende des Schlauchrollbalges (20) befestigt ist.

6. Vorrichtung nach Anspruch 5, **dadurch gekennzeichnet, dass** ein Deckel (50) vorgesehen ist, der die Vulkanisationsform (30) oben verschließt, während der Stempel (60) die untere Öffnung verschließt.

7. Vorrichtung nach Anspruch 5 oder 6, **dadurch gekennzeichnet, dass** ein abnehmbarer Aufsatz (70) zur Stabilisierung des Schlauchrollbalges (20) dem Stempel (60) zugeordnet ist, wenn der Stempel (60) sich nicht innerhalb der Vulkanisationsform (30) befindet.
